# EUROPEAN PATENT SPECIFICATION

(11) **EP 2 316 797 B1**
(45) Date of publication and mention of the grant of the patent: **02.12.2015**
(21) Application number: 10188503.6
(22) Date of filing: 22.10.2010
(51) Int. Cl.: C03B 33/027, C03B 33/03, C03B 33/037, C03B 33/04, C03B 33/07, C03B 33/10

(54) **MACHINE AND METHOD FOR PERFORMING CUTTING OPERATIONS ON A MULTI-LAYERED GLASS SHEET ALONG A PREDERMINED PATH**
MASCHINE UND VERFAHREN ZUR DURCHFÜHRUNG VON SCHNEIDOPERATIONEN AUF EINEM MEHRSCHICHTIGEN GLASSCHEIBEN ENTLANG EINER VORBESTIMMTEN VERLAUFSBAHN
MACHINE ET PROCÉDÉ POUR EFFECTUER DES OPÉRATIONS DE DÉCOUPE SUR UNE FEUILLE VERRE MULTICOUCHES LE LONG D'UNE TRAJECTOIRE PRÉDÉTERMINÉE

(30) Priority: 27.10.2009 IT TO20090822
(43) Date of publication of application: 04.05.2011
(73) Proprietor: BIESSE S.p.A., 61100 Pesaro (IT)
(72) Inventor: Aimar, Giacomo, 61100 Chiusa di Ginestreto (Pesaro) (IT)
(74) Representative: Notaro, Giancarlo

(56) References cited:
- EP-A1- 0 761 615
- EP-A1- 1 944 274
- EP-A2- 1 473 283
- DE-B4- 10 164 872
- GB-A- 2 204 577
- JP-A- 2000 263 495
- JP-A- 2000 319 029
- US-A- 3 682 027
- US-A- 3 744 690
- US-A- 4 495 845
- US-A- 5 038 654
- US-A1- 2004 154 456
- US-A1- 2007 204 739

## Description

### Field of the invention

The present invention relates to a machine and to a method for performing cutting operations on multi-layered glass sheets along a predetermined path.

### Prior art

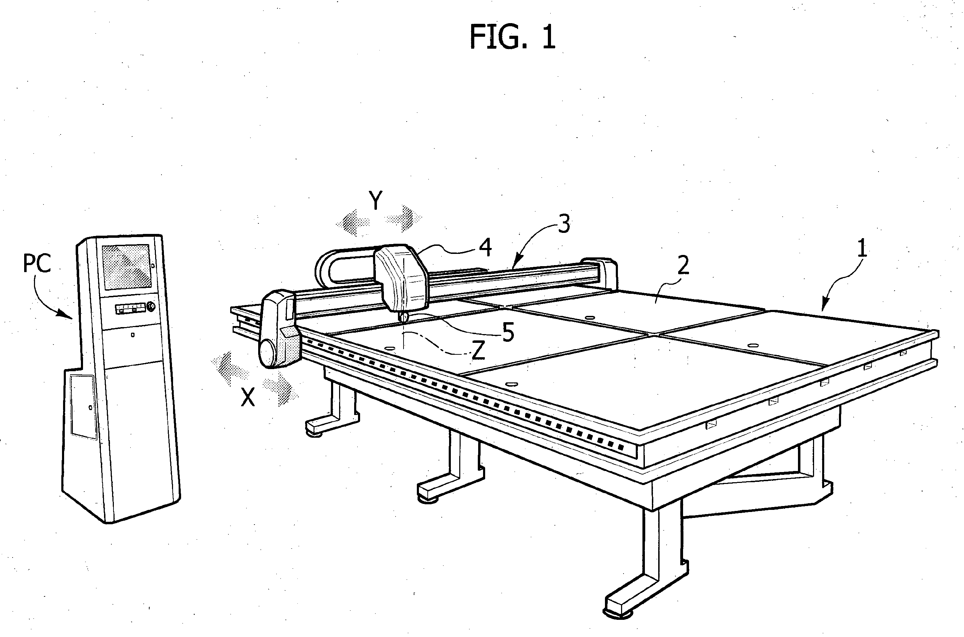

Electronic-control machines are known for cutting monolithic glass sheets, of the type schematically illustrated in the annexed Figure 1. With reference to said figure, said machines comprise a bench 1, defining a working surface 2 that is to receive the sheets to be machined, an overhead cross-member 3 guided along an axis X above the two sides of the bench 1, like an overhead-travelling crane, a carriage 4 mobile along the axis Y of the cross-member 3, and an operating head (not visible in the figure), carried by the carriage 4 and mobile with respect to this along a vertical axis Z. The operating head carries a wheel scribing tool 5, which can be oriented about said axis Z. Also provided are motor means (not visible in the figure) for control of the cross-member 3, the carriage 4, and the operating head along the three axes X, Y, and Z, respectively, as well as means, designated by the reference PC, for electronic control of the motor means.

With machines of the type described above it is possible to cut monolithic glass sheets according to any pre-set shape or profile, rectilinear and/or curved.

The cutting operation becomes much more complex with multi-layered glass sheets. Said sheets, use of which has become increasingly widespread where it is necessary to guarantee that the glass does not shatter in the event of accidental impact, comprise a top glass sheet, a bottom glass sheet and an intermediate film of synthetic plastic material, usually polyvinyl butyral (PVB).

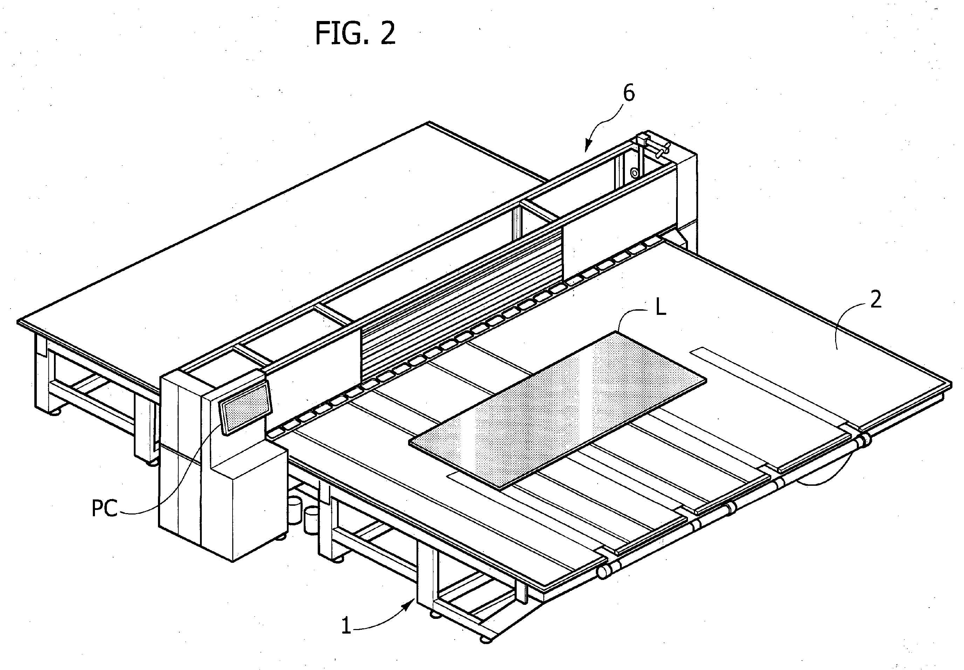

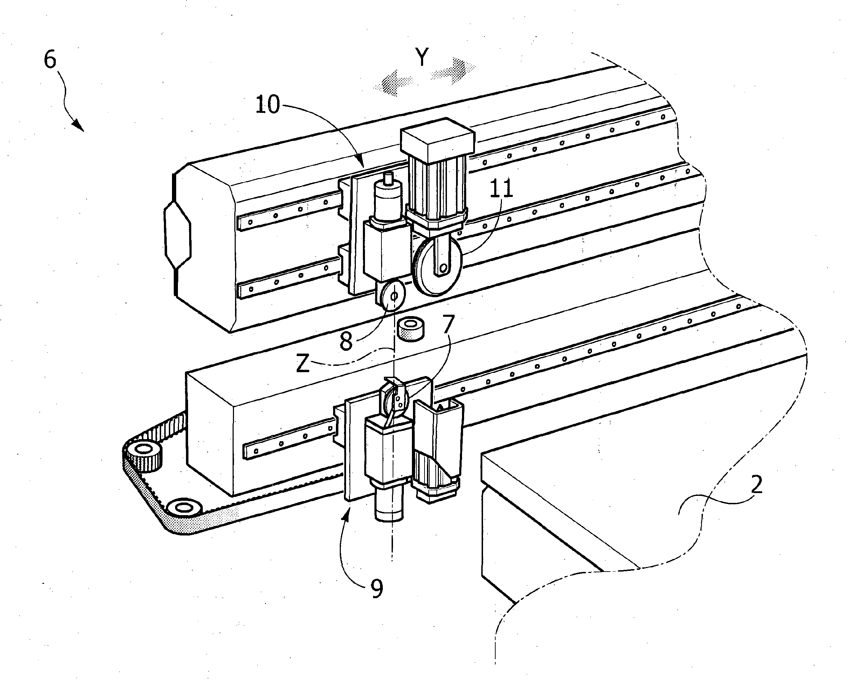

Automatic cutting of multi-layered glass sheets is obtained with machines of the type illustrated in Figure 2, comprising a bench 1, defining a resting surface 2 for the glass sheets L, and a fixed bridge 6. Cutting of the multi-layered glass sheet L is obtained with a first step of scoring of the top and bottom sheets, a step of breaking of each of said top and bottom sheets into two separate portions, a step of softening of the plastic film, and a step of detachment or of tearing of the plastic film to obtain a total separation of the two portions of the multi-layered glass sheet. On account of the relative complexity of said operations, the bridge 6 is fixed with respect to the work bench in so far as it has a very complex and heavy structure. An example of embodiment of the devices prearranged on the fixed bridge 6 may be seen in the annexed Figure 3, which also regards the prior art. The fixed bridge 6 comprises wheel scribing tools 7 and 8, set respectively beneath and above the working surface 2, carried respectively by two slides 9 and 10 that slide in the direction Y on the bridge 6. The bridge 6 further comprises means for breaking the top sheet and the bottom sheet, included between which is, for example, a breaking wheel of the type designated by 11 in Figure 3. Likewise provided are means for heating the plastic film (not illustrated) that intervene following upon the breaking operation.

A further example of machine of this type is illustrated in the document No. EP 0 503 647 B1.

As a consequence of the aforesaid structure and arrangement, said machines are able to perform cutting of multi-layered glass sheets only along a straight line defined by the longitudinal direction of the fixed bridge 6. The sheet must then be turned in different positions underneath the cutting bridge 6 for performing rectilinear cuts along its various sides. For example, in order to cut a starting sheet several times to obtain smaller sheets, the sheet is divided into a number of transverse strips, and after cutting each strip the latter is turned through 90° to divide it into a number of parts with subsequent cutting operations.

Consequently, with this type of machine only rectangular or square glass sheets can be obtained.

There are moreover known, for example, from the patent No. EP 1 118 592 B1, machines for execution of oblique rectilinear cuts on multi-layered glass sheets, which, in addition to the characteristics already described above, also comprise costly and complex means to get the sheet to turn through any desired angle on the surface of the bench prior to the cutting operation.

In the patent No. EP 1 118 592 B1 it is theoretically envisaged to perform also curvilinear cuts, but with considerable technical limitations (a rotation of the sheet is envisaged) and poor quality of the cut since it is not ensured that the scribing wheel will always remain perfectly tangential to the scribing path, with consequent considerable difficulty in the subsequent breaking and with the end result of unacceptable quality.

None of the known machines is instead able to perform an operation of scoring of a multi-layered glass sheet along a curved line, with simple means and ensuring a high quality and precision of the score.

A machine and a method according to the preambles of claims 1 and 5 are known from DE 101 64 872 B4.

### Object of the invention

The object of the present invention is to solve the latter problem by providing a machine for cutting multi-layered glass sheets that is able to make the score along any predetermined path, including the case of a curved line.

A further object is to provide a machine for cutting multi-layered glass sheets that will be simple and economically advantageous, at the same time guaranteeing maximum efficiency, functionality, and versatility.

Yet a further object of the invention is to provide a machine that will be in any case advantageously usable also for cutting monolithic glass sheets so as to enable the user to avoid the use of a second machine dedicated to cutting sheets of this type.

### Summary of the invention

With a view to achieving the above and further purposes, the subject of the invention is a machine for performing cutting operations on multi-layered glass sheets, having the characteristics of Claim 1.

The subject of the present invention is also a method according to Claim 5.

Thanks to the aforesaid characteristics, the invention enables the following advantages to be achieved:
- it is possible to score a multi-layered glass sheet along a curved line (for example, to obtain an arched top side in a glass sheet that is to be mounted on a door or window);
- it is possible to score a multi-layered glass sheet along different sides without re-positioning the sheet; and
- it is possible to cut a monolithic glass sheet along different sides, without re-positioning the sheet.

Further advantageous features of the invention are indicated in the dependent claims.

### Brief description of the annexed figures

The invention will now be described, purely by way of non-limiting example, with reference to the figures of the annexed drawings, in which:
- Figures 1 to 3, which regard the known art, have already been described previously;
- Figure 4 is a schematic cross-sectional view at an enlarged scale of a multi-layered glass sheet;

- Figures 5 and 6A show two particular embodiments of the scribing tools, only the embodiment of figure 6A forming part of the invention, and Figure 6B shows a front view, at an enlarged scale and partially sectioned, of a detail of Figure 6A;
- Figures 7 and 8 show two particular embodiments of the means for moving the sheet on the fixed bench only the embodiment of figure 8 forming part of the invention;
- Figures 9A and 9B are two top plan views of a machine according to the invention before and after the operation of cutting of a sheet according to a pre-set path; and
- Figure 10 is a schematic illustration at an enlarged scale of a detail of the position of the top scribing wheel with respect to the path to be followed.

### Detailed description of preferred embodiments

Illustrated in the ensuing description are various specific details aimed at an in-depth understanding of the embodiments. The embodiments can be provided without one or more of the specific details, or with other methods, components, materials, etc. In other cases, known structures, details of construction, materials, or operations are not illustrated or described in detail, in so far as they can be obtained in any known way and also in so far as they do not fall, taken in themselves, within the scope of the present invention.

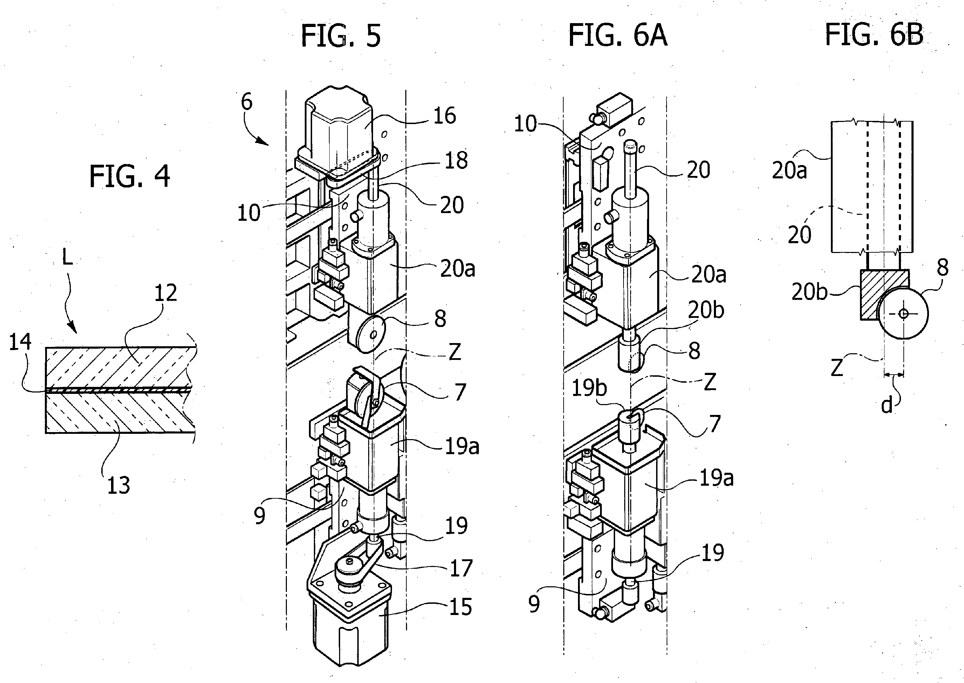

Figure 4 shows a cross-sectional view of a portion of a multi-layered glass sheet L comprising a top glass sheet 12, a bottom glass sheet 13, and an intermediate film 14 of synthetic plastic material. In Figure 4, the proportions between the thicknesses of the glass sheets 12 and 13 and of the intermediate film 14 are exaggerated with the sole purpose of rendering the figure itself clearer.

In the ensuing description, reference will be made to a machine for cutting glass sheets, in particular for multi-layered glass sheets, of the type illustrated in Figures 2 and 3. In what follows, the same references as the ones that have been used in Figures 2, 3 will hence be used to indicate the parts of the machine that remain unvaried with respect to said figures, and new references will be used for the parts that have changed.

A first important difference of the machine according to the present invention with respect to the known machine illustrated in Figure 3 lies in the fact that the two scribing tools 7, 8 are supported so as to be able to turn about the vertical axis Z. Figures 5, 6A and 6B show the detail of the two assemblies associated to the scribing wheels, as modified in accordance with the teachings of the present invention, in two different embodiments.

In the embodiment illustrated in Figure 5, which does not form part of the invention, the scribing wheels 7 and 8 can be governed positively in rotation about the axis Z by means of two respective motors 15 and 16 carried by the slides 9 and 10. In particular, rotation of the output shafts of the motors 15 and 16 is transmitted through two transmission belts 17 and 18 at the ends of two shafts 19 and 20, which are supported so that they can turn about the axis Z by casings 19a and 20a fixed to the slides 9, 10. The opposite ends of the shafts 19, 20 project on the outside of the casings 19a and 20a and support the scribing wheels 7 and 8 in a freely rotatable way about the respective horizontal axes of said wheels. The motors 15 and 16 are controlled by electronic control means PC (similar to the ones illustrated in Figure 2).

In the embodiment illustrated in Figures 6A and 6B, the top scribing tool 8 and the bottom scribing tool 7 are carried by respective supports 20b, 19b that are freely rotatable about the axis Z, without any provision of motors designed to control said rotation positively about the axis Z. The scribing wheels 7, 8 are mounted so that they can turn freely on the aforesaid supports 20b, 19b about a horizontal axis of rotation set at a distance with respect to the axis Z that is designated by the reference d in Figure 6B. The horizontal axis of rotation of the wheels 7, 8 is set at a distance from the axis Z to ensure automatic orientation of the scribing wheels during the scoring operation in the direction of the local tangent to the scribing path. In this case, as will be seen, during the operation of scoring a glass sheet along a desired scribing path, the scribing wheels 7, 8 will automatically assume an orientation tangential to the path at the point in which they are located as a result of the friction with the multi-layered glass sheet L.

A basic idea underlying the present invention is that of moving the sheet in the direction X during the scoring operation, in a way co-ordinated with a movement in the direction Y of the scribing slides and without imparting a rotation upon the sheet, to obtain a score according to any predetermined path, including also curved stretches, said result being possible also thanks to the fact that the scribing wheels are able to orient themselves about a vertical axis Z.

According to a further preferred characteristic of the invention, the means for moving the sheet in the direction X comprise one or more gripping members carried by a structure that is mobile in the direction X with respect to the fixed bench 2. The structure that is mobile with respect to the fixed bench 2 can be obtained in different ways, for example, with a mobile bridge set above the resting surface which does not form part of the invention, or with a mobile hide-away bridge under the resting surface.

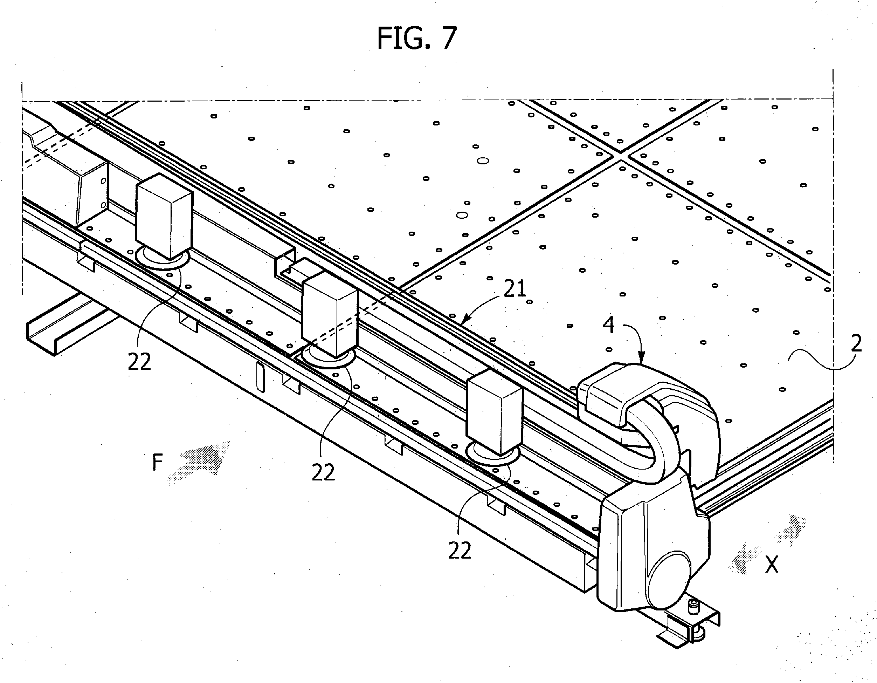

In the embodiment illustrated in Figure 7, which does not form part of the invention, the structure that carries the gripping members is obtained with a mobile bridge 21 set above the resting surface 2, upstream of the fixed bridge 6, with reference to the direction of feed F (see Figure 7) of the sheet on the resting surface 2. The mobile bridge 21 can have a structure substantially similar to that of a cutting bridge for monolithic glass sheets, like the one illustrated in Figure 1, except that it is also provided simply with members for gripping the sheet, instead of having a carriage equipped with a cutting head of the type designated by 4 in Figure 1. Nor is it excluded, however, that the machine according to the invention can be equipped with an auxiliary bridge 21 provided both with members 22 for gripping the sheet and with a cutting carriage 4, as is precisely the case illustrated in Figure 7. In this case, the gripping members are suction pads, provided with a structure in itself known, designed to engage the top surface of the sheet so as to force it to displace in the direction X following upon a movement of the bridge 21 in said direction X.

In an alternative embodiment (not illustrated in the drawings), the mobile bridge 21 can be positioned downstream of the fixed bridge 6.

As already mentioned, the movement in the direction X of the sheet (for example, obtained with the aid of the mobile bridge 21) is controlled during the step of scoring of the sheet in such a way that the combination of said movement in the direction X with the movement of the slides 9 and 10 in the direction Y will enable a score to be made according to a desired path. In a variant which does not form part of the invention, (not illustrated in the figures), on the bridge 21, instead of the suction pads 22, there may be provided grippers designed to grip an edge of the sheet L once again with the purpose of displacing it in the direction X during the cutting step.

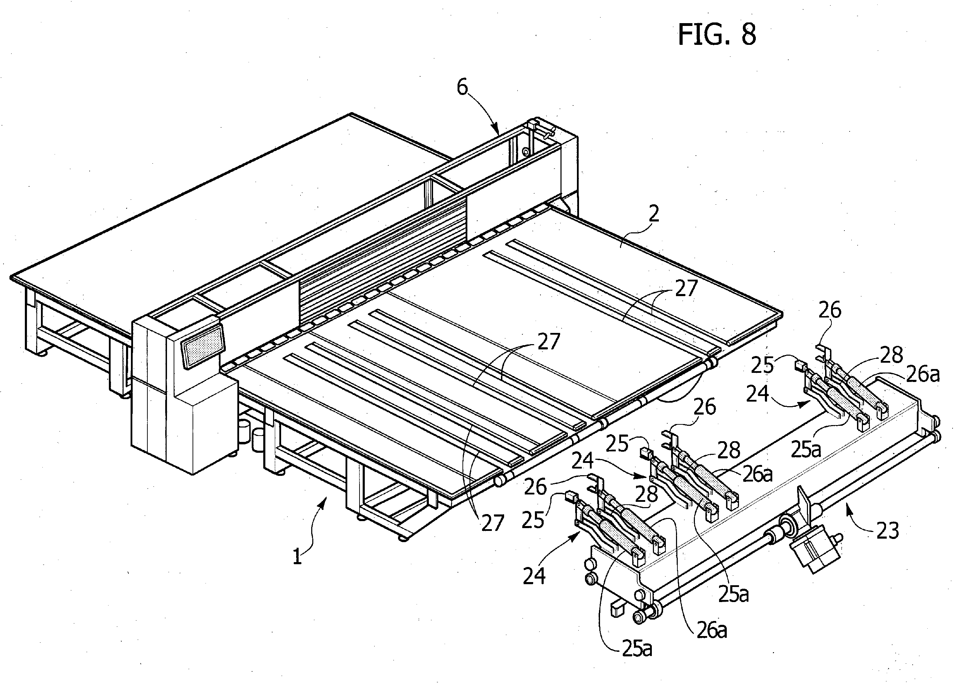

In an embodiment according to the present invention (illustrated in exploded view in Figure 8), the members for gripping the sheet are grippers 26 carried by a bridge 23 mobile underneath the resting surface 2.

The bridge in question is an abutment bridge, in itself known, typically used in the machines illustrated in Figure 2 in order to position the sheet L for a cut to size of a strip starting from a semi-finished sheet. In particular, as is known in the art, the abutment bridge 23 comprises a plurality of articulated arms 24, mounted on which are stop members 25, bearing upon which is the front edge of the sheet for positioning the latter in order to cut it to the desired size. The stop members 25 can be displaced by means of fluid actuators 25a between a retracted position underneath the resting surface 2 and an operative position projecting above the resting surface 2 through corresponding slits 27.

In the embodiment illustrated, according to the invention, the bridge 23, in addition to being provided with the stop members 25, is also provided with grippers 26, which are carried by respective articulated arms 28, to which fluid actuators 26a are associated, and which are also designed to project above the resting surface 2 through slits 27 (in Figure 8 the bridge 23 is illustrated in the extracted position for convenience of representation, the bridge being hidden underneath the resting surface 2 in the assembled condition).

In an alternative embodiment (not illustrated), the grippers 26 themselves in their closed condition can be used as contrast reference surfaces 25.

Instead, in an alternative embodiment (not illustrated), the grippers 26 could also be replaced by suction pads designed to engage the bottom sheet of the sheet L.

Operation of the machine according to the invention in the various embodiments illustrated above will now be described in detail.

As already mentioned above, the machine according to the invention is able to perform scoring of the top sheet and of the bottom sheet of a multi-layered glass sheet of the type illustrated in Figure 4 according to any desired path in the plane of the sheet even if it includes curved stretches.

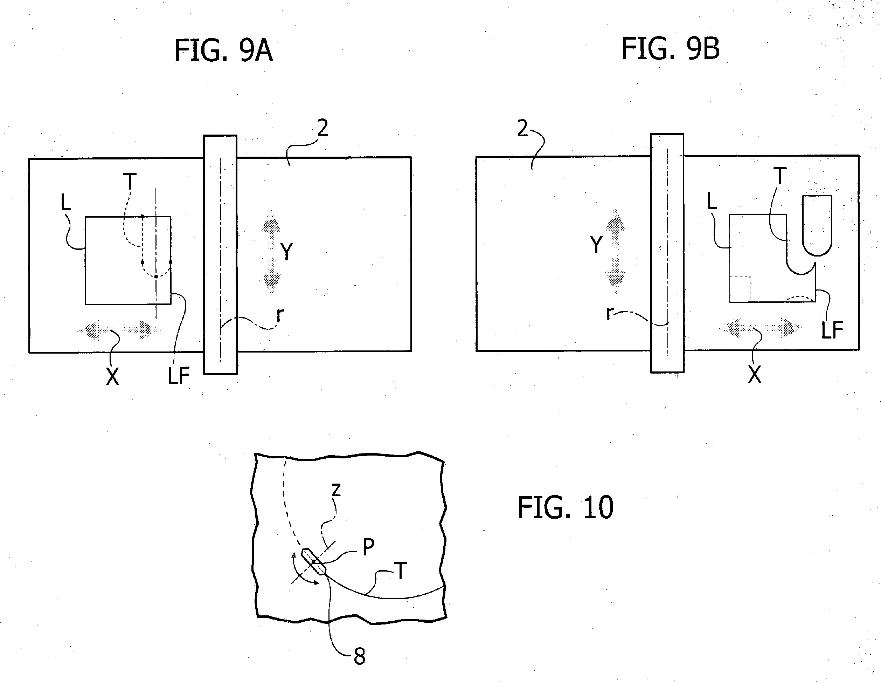

A typical case is the one illustrated schematically in Figures 9A and 9B, where a multi-layered glass sheet is cut to obtain a window or door pane with an arched top edge.

Figures 9A and 9B show two schematic top plan views of a machine according to the invention, respectively before and after the operation of cutting the sheet L according to the pre-set path indicated by the dashed line T in Figure 9A. In said figures, the means for moving the sheet in the direction X have not been illustrated for reasons of simplicity and clarity, said means possibly being obtained in any of the ways illustrated above.

In a first step, the sheet L is rested on the working surface 2 and is then positioned in such a way that its front edge LF is set along the straight line r along which the scribing wheels 7, 8 are mobile. In a second step, the movement of the sheet in the direction X and the movement of the scribing slides 9 and 10 in the direction Y are activated simultaneously and in a co-ordinated way in order to carry out scoring along the desired path T of the top and bottom sheets of the sheet L.

Figure 10 is a schematic illustration at an enlarged scale of the detail of the top scribing wheel 8 in a point P of the path T. As illustrated in Figure 10, the top scribing wheel 8 is in a position tangential to the cutting line T at the point P. This also applies to the bottom scribing wheel 7.

Said positioning of the wheels 7 and 8 tangential to the path is controlled positively, as already mentioned, in the case of the embodiment of Figure 5, whereas it is obtained automatically, as a result of the engagement of the wheels on the sheet, in the case of the embodiment of Figures 6A and 6B.

At the end of the scoring operation, the sheet L is subjected to a step of breaking, a step of softening of the plastic film (with known means, for example, via localized heating by means of a resistor), and a step of tearing of the plastic film to obtain a total separation of the two portions L1 and L2 illustrated in Figure 9B. The further machining steps, subsequent to the cutting step, can be performed in any known way, either automatically or manually.

Advantageously, with the machine according to the present invention it is possible to obtain on a sheet (of monolithic glass or multi-layered glass) being machined cuts at 90° without the need to turn the sheet at the end of execution of the first stretch, thus considerably reducing the times for machining of a sheet. In fact, with the machine according to the present invention, at the end of execution of the first stretch it is possible to perform the cut along the second stretch thanks to the possibility for the scribing tools to turn (in this case through 90°) with their supports about the axis Z.

Finally, the electric motors that drive the various mobile parts of the machine, such as, for example, the slides or the bridges 21 and 23, are not illustrated in the annexed figures and are controlled by the electronic control means PC, which are programmable in a known way to enable execution of predetermined machining cycles on the sheets to be machined.

Consequently, without prejudice to the principle of the invention, the details of construction and the embodiments may vary, even significantly, with respect to what is described and illustrated herein purely by way of non-limiting example, without thereby departing from the scope of the invention, as defined by the ensuing claims.

## Claims

1. A machine for performing cutting operations on multi-layered glass sheets which comprise a top glass sheet, a bottom glass sheet and an intermediate film of synthetic plastic material, said machine comprising:
- a fixed work bench (1), defining a resting surface (2) that is to receive the sheet (L) to be machined;
- a fixed cutting bridge (6), mounted on which are a top scribing tool (8) and a bottom scribing tool (7) set respectively above and beneath said resting surface, which are mobile along the cutting bridge (6) in a direction Y parallel to the longitudinal direction of the cutting bridge (6) in order to perform scoring operations on the top and bottom sheets of a multi-layered glass sheet (L), said cutting bridge (6) being provided with means for actuating the movement of said scribing tools (8, 7) in the direction Y;
- means for moving (21, 22, 23, 26) said sheet (L) on the fixed bench (1) in a horizontal direction X orthogonal to the aforesaid direction Y; and
- electronic control means (PC) for controlling said means for actuating the movement of the scribing tools (8, 7) in the direction Y and of said means for moving the sheet in the direction X,
wherein:
- both the top scribing tool (8) and the bottom scribing tool (7) are mounted so that they can turn about a common axis Z orthogonal to the direction X and to the direction Y, while being moved along the direction Y;
- the electronic control means (PC) are programmed for controlling during the operation of scoring of the top and bottom sheets of the multi-layered glass sheet (L) a movement in the direction X of the sheet (L) and a movement in the direction Y of the tools (8, 7), said movements being co-ordinated with one another in such a way as to obtain a score on said top and bottom sheets according to any predetermined path (T) in the plane of the sheet (L), with rectilinear and/or curved stretches, without imparting a rotation upon the sheet;
- said top and bottom scribing tools (8, 7) being wheels which are always oriented, during the scoring operation, according to the tangent to the scribing path at the point of the path in which they are located; and
- said means for moving said sheet in the horizontal direction X during the scoring operation comprise one or more members (22, 26) for gripping the sheet, carried by a bridge (21, 23) mobile with respect to the fixed bench (1), said machine being **characterized in that**:
- said wheels constituting the top scribing tool (8) and the bottom scribing tool (7) are each carried by a respective support (20b,19b) which is freely rotatable about said common axis Z,
- each of said wheels constituting the top scribing tool (8) and the bottom scribing tool (7) is freely rotatable on the respective support (20b,19b) about a horizontal axis which is set at a distance (d) from said common axis Z,
so as to ensure automatic orientation of the scribing wheels during the scoring operation in the direction of the local tangent to the scribing path, and **in that**
- said mobile bridge (21, 23) that carries said gripping members (22, 26) is an abutment bridge (23), which is mobile underneath the resting surface (2) and has the aforesaid gripping members (22, 26) that project above the resting surface (2) through longitudinal slits (27) in the resting surface (2), downstream of the fixed cutting bridge (6), and
- said abutment bridge (23) is also provided with a plurality of stop members (25) for contact with the front edge of the sheet in order to stop the latter in a desired position with respect to the fixed cutting bridge.

2. The machine according to Claim 1, **characterized in that** said gripping members (22, 26) for gripping the sheet (L) are grippers (26) designed to grip one edge of the sheet (L).

3. The machine according to Claim 1, **characterized in that** said gripping members (22, 26) for gripping the sheet (L) are suction pads (22) designed to engage the bottom surface (13) of the sheet (L).

4. The machine according to Claim 1, **characterized in that** said electronic control means are programmed for performing scores along curved lines via said co-ordinated movements of the sheet in the direction X and of the scribing tools (7, 8) in the direction Y, without imparting a rotation upon the sheet during the scoring operation.

5. A method for performing scoring operations on multi-layered glass sheets (L) which comprise a top glass sheet, a bottom glass sheet and an intermediate film of synthetic plastic material, said method comprising the step of providing:
- a fixed work bench (1), defining a resting surface (2) that is to receive the sheet (L) to be machined; and
- a fixed cutting bridge (6), mounted on which are a top scribing tool (8) and a bottom scribing tool (7) set respectively above and beneath said resting surface, which are mobile along the cutting bridge (6) in a direction Y parallel to the longitudinal direction of the cutting bridge (6), in order to perform scoring operations on the top and bottom sheets of a multi-layered glass sheet (L), said cutting bridge (6) being provided with means for actuating the movement of said scribing tools (8, 7) in the direction Y,
wherein:
- both the top tool (8) and the bottom tool (7) are mounted so that they can turn about a common axis Z orthogonal to the direction X and to the direction Y while being moved along the direction Y;
- during the scoring operation of the top and bottom sheets of the multi-layered glass sheet (L) both a movement of the glass sheet (L) in a horizontal direction X orthogonal to the aforesaid direction Y and a movement of the tools (8, 7) in the direction Y are governed in such a way as to obtain a score on said top and bottom sheets according to any predetermined path (T) in the plane of the sheet (L), with rectilinear and/or curved stretches, , without imparting a rotation upon the sheet;
- said top and bottom scribing tools (8, 7) are wheels which are always oriented, during the scoring operation, according to the tangent to the scribing path at the point of the path in which they are located; and
- said sheet is moved in the horizontal direction X during the scoring operation by means of one or more members (22, 26) for gripping the sheet, carried by a bridge (21, 23) mobile with respect to the fixed bench (1)
said method being **characterized in that**:
- said wheels constituting the top scribing tool (8) and the bottom scribing tool (7) are each carried by a respective support (20b,19b) which is freely rotatable about said common axis Z,
- each of said wheels constituting the top scribing tool (8) and the bottom scribing tool (7) is freely rotatable on the respective support (20b,19b) about a horizontal axis which is set at a distance (d) from said common axis Z,
so as to ensure automatic orientation of the scribing wheels during the scoring operation in the direction of the local tangent to the scribing path, and **in that**
- said mobile bridge (21, 23) that carries said gripping members (22, 26) is an abutment bridge (23), which is mobile underneath the resting surface (2) and has the aforesaid gripping members (22, 26) that project above the resting surface (2) through longitudinal slits (27) in the resting surface (2), downstream of the fixed cutting bridge (6), and
- said abutment bridge (23) is also provided with a plurality of stop members (25) for contact with the front edge of the sheet in order to stop the latter in a desired position with respect to the fixed cutting bridge.

6. The method according to Claim 5, **characterized in that**:
an operation of scoring of the sheet is performed along two mutually orthogonal sides, keeping the sheet stationary, i.e., without imparting a rotation upon the sheet between the end of scoring of the first side and the start of scoring of the second side; and
during scoring of the second side, said scribing tools (7, 8) have an orientation rotated through 90° about said axis Z with respect to their orientation during scoring of the first side.

## Patentansprüche

1. Maschine zur Durchführung von Schneidevorgängen an mehrschichtigen flachen Glaselementen, die eine obere Glasscheibe, eine untere Glasscheibe und eine Zwischenfolie aus synthetischem Kunststoffmaterial umfassen, wobei die Maschine Folgendes umfasst:
- eine unbewegliche Werkbank (1), die eine Auflagefläche (2) begrenzt, welche dazu dient, das Flachelement (L) aufzunehmen, welches bearbeitet werden soll;
- eine unbewegliche Schneidebrücke (6), auf welcher ein oberes Anritzwerkzeug (8) und ein unteres Anritzwerkzeug (7) derart angebracht sind, dass sie sich über beziehungsweise unter der Auflagefläche befinden, wobei sie entlang der Schneidebrücke (6) in einer Richtung Y beweglich sind, die parallel zur Längsrichtung der Schneidebrücke (6) ist, sodass Ritzvorgänge an der oberen und der unteren Scheibe eines mehrschichtigen flachen Glaselements (L) vorgenommen werden können, wobei die Schneidebrücke (6) mit Mitteln versehen ist, die dazu bestimmt sind, die Bewegung der Anritzwerkzeuge (8, 7) in die Richtung Y zu bewirken;
- Mittel zum Bewegen (21, 22, 23, 26) des Flachelements (L) auf der unbeweglichen Bank (1) in einer horizontalen Richtung X, die rechtwinklig zur vorstehend genannten Richtung Y ist; und
- elektronische Steuerungsmittel (PC) zum Steuern der Mittel zum Bewirken der Bewegung der Anritzwerkzeuge (8, 7) in der Richtung Y sowie der Mittel zum Bewegen des Flachelements in der Richtung X,
wobei:
- sowohl das obere Anritzwerkzeug (8) als auch das untere Anritzwerkzeug (7) derart angebracht sind, dass sie um eine gemeinsame Achse Z drehbar sind, welche rechtwinklig zur Richtung X und zur Richtung Y ist, während sie entlang der Richtung Y bewegt werden;
- die elektronischen Steuermittel (PC) derart programmiert sind, dass sie während des Vorgangs des Ritzens der oberen und unteren Scheibe des mehrschichtigen flachen Glaselements (L) eine Bewegung des Flachelements (L) in der Richtung X und eine Bewegung der Werkzeuge (8, 7) in der Richtung Y steuern, wobei die Bewegungen derart aufeinander abgestimmt werden, dass auf der oberen und unteren Scheibe eine Ritzung gemäß einem beliebigen vorbestimmten Verlauf (T) in der Ebene des Flachelements (L) erhalten wird, wobei dieser geradlinige und/oder gekrümmte Abschnitte umfassen kann, ohne dass das Flachelement einer Drehbewegung ausgesetzt wird;
- es sich bei dem oberen und unteren Anritzwerkzeug (8, 7) um Räder handelt, die während des Ritzvorgangs stets gemäß der Tangente zum Anritzverlauf an derjenigen Stelle des Verlaufs ausgerichtet sind, an welcher sie sich befinden; und
- die Mittel, welche dazu bestimmt sind, während des Ritzvorgangs das Flachelement in der horizontalen Richtung X zu bewegen, ein oder mehrere Glieder (22, 26) zum Greifen des Flachelements umfassen, die von einer Brücke (21, 23) unterstützt werden, welche unter Bezugnahme auf die unbewegliche Bank (1) beweglich ist,
wobei die Maschine **dadurch gekennzeichnet ist, dass**:
- die Räder, welche das obere Anritzwerkzeug (8) und das untere Anritzwerkzeug (7) darstellen, von jeweils einem Träger (20b, 19b) unterstützt werden, der um die gemeinsame Achse Z frei drehbar ist,
- jedes der Räder, welche das obere Anritzwerkzeug (8) und das untere Anritzwerkzeug (7) darstellen, auf seinem jeweiligen Träger (20b, 19b) frei um eine horizontale Achse drehbar ist, die in einem Abstand (d) von der gemeinsamen Achse Z angeordnet ist,
um auf diese Weise sicherzustellen, dass sich die Anritzräder während des Ritzvorgangs automatisch in Richtung der örtlich anliegenden Tangente zum Anritzverlauf ausrichten, sowie dadurch, dass
- es sich bei der beweglichen Brücke (21, 23), welche die Greifglieder (22, 26) unterstützt, um eine Widerlagerbrücke (23) handelt, die unterhalb der Auflagefläche (2) beweglich ist und mit den vorstehend genannten Greifgliedern (22, 26) versehen ist, wobei diese sich durch Längsschlitze (27) in der Auflagefläche (2), welche im Bearbeitungssinne hinter der unbeweglichen Schneidebrücke (6) befinden, über die Auflagefläche (2) hinausragen, und
- die Widerlagerbrücke (23) weiterhin mit mehreren Stoppgliedern (25) versehen ist, die dazu bestimmt sind, mit der Vorderkante des Flachelements in Kontakt zu treten, um letzteres unter Bezugnahme auf die unbewegliche Schneidebrücke in einer gewünschten Position zu stoppen.

2. Maschine gemäß Anspruch 1, **dadurch gekennzeichnet, dass** es sich bei den Greifgliedern (22, 26), die zum Greifen des Flachelements (L) bestimmt sind, um Greifer (26) handelt, die dafür ausgelegt sind, eine Kante des Flachelements (L) zu greifen.

3. Maschine gemäß Anspruch 1, **dadurch gekennzeichnet, dass** es sich bei den Greifgliedern (22, 26), die zum Greifen des Flachelements (L) bestimmt sind, um Saugnäpfe (22) handelt, die dafür ausgelegt sind, eine kraftübertragende Verbindung mit der unteren Fläche (13) des Flachelements (L) einzugehen.

4. Maschine gemäß Anspruch 1, **dadurch gekennzeichnet, dass** die elektronischen Steuermittel derart programmiert sind, dass die Ritzung entlang gekrümmter Linien erfolgt, indem die Bewegungen des Flachelements in der Richtung X und der Anritzwerkzeuge (7, 8) in der Richtung Y aufeinander abgestimmt werden, ohne dass das Flachelement während des Ritzvorgangs einer Drehbewegung ausgesetzt wird.

5. Verfahren zur Durchführung von Ritzvorgängen an mehrschichtigen flachen Glaselementen (L), die eine obere Glasscheibe, eine untere Glasscheibe und eine Zwischenfolie aus synthetischem Kunststoffmaterial umfassen, wobei das Verfahren den Schritt umfasst, in welchem Folgendes bereitgestellt wird:
- eine unbewegliche Werkbank (1), die eine Auflagefläche (2) begrenzt, welche dazu dient, das Flachelement (L) aufzunehmen, welches bearbeitet werden soll; und
- eine unbewegliche Schneidebrücke (6), auf welcher ein oberes Anritzwerkzeug (8) und ein unteres Anritzwerkzeug (7) derart angebracht sind, dass sie sich über beziehungsweise unter der Auflagefläche befinden, wobei sie entlang der Schneidebrücke (6) in einer Richtung Y beweglich sind, die parallel zur Längsrichtung der Schneidebrücke (6) ist, sodass Ritzvorgänge an der oberen und unteren Scheibe eines mehrschichtigen flachen Glaselements (L) vorgenommen werden können, wobei die Schneidebrücke (6) mit Mitteln versehen ist, die dazu bestimmt sind, die Bewegung der Anritzwerkzeuge (8, 7) in die Richtung Y zu bewirken,
wobei:
- sowohl das obere Werkzeug (8) als auch das untere Werkzeug (7) derart angebracht sind, dass sie um eine gemeinsame Achse Z drehbar sind, welche rechtwinklig zur Richtung X und zur Richtung Y ist, während sie entlang der Richtung Y bewegt werden;
- während des Vorgangs des Ritzens der oberen und unteren Scheibe des mehrschichtigen flachen Glaselements (L) sowohl eine Bewegung des flachen Glaselements (L) in einer horizontalen Richtung X, die rechtwinklig zu der vorstehend genannten Richtung Y ist, als auch eine Bewegung der Werkzeuge (8, 7) in der Richtung Y derart gelenkt werden, dass auf der oberen und unteren Scheibe eine Ritzung gemäß einem beliebigen vorbestimmten Verlauf (T) in der Ebene des Flachelements (L) erhalten wird, wobei dieser geradlinige und/oder gekrümmte Abschnitte umfassen kann, ohne dass das Flachelement einer Drehbewegung ausgesetzt wird;
- es sich bei dem oberen und unteren Anritzwerkzeug (8, 7) um Räder handelt, die während des Ritzvorgangs stets gemäß der Tangente zum Anritzverlauf an derjenigen Stelle des Verlaufs ausgerichtet sind, an welcher sie sich befinden; und
- das Flachelement während des Ritzvorgangs mittels eines oder mehrerer Glieder (22, 26), die zum Greifen des Flachelements bestimmt sind und von einer Brücke (21, 23) unterstützt werden, welche unter Bezugnahme auf die unbewegliche Bank (1) beweglich ist, in der horizontalen Richtung X bewegt wird,
wobei das Verfahren **dadurch gekennzeichnet ist, dass**:
- die Räder, welche das obere Anritzwerkzeug (8) und das untere Anritzwerkzeug (7) darstellen, von jeweils einem Träger (20b, 19b) unterstützt werden, der um die gemeinsame Achse Z frei drehbar ist,
- jedes der Räder, welche das obere Anritzwerkzeug (8) und das untere Anritzwerkzeug (7) darstellen, auf seinem jeweiligen Träger (20b, 19b) frei um eine horizontale Achse drehbar ist, die in einem Abstand (d) von der gemeinsamen Achse Z angeordnet ist,
um auf diese Weise sicherzustellen, dass sich die Anritzräder während des Ritzvorgangs automatisch in Richtung der örtlich anliegenden Tangente zum Anitzverlauf ausrichten, sowie dadurch, dass
- es sich bei der beweglichen Brücke (21, 23), welche die Greifglieder (22, 26) unterstützt, um eine Widerlagerbrücke (23) handelt, die unterhalb der Auflagefläche (2) beweglich ist und mit den vorstehend genannten Greifgliedern (22, 26) versehen ist, wobei diese durch Längsschlitze (27) in der Auflagefläche (2), welche sich im Bearbeitungssinne hinter der unbeweglichen Schneidebrücke (6) befinden, über die Auflagefläche (2) hinausragen, und
- die Widerlagerbrücke (23) weiterhin mit mehreren Stoppgliedern (25) versehen ist, die dazu bestimmt sind, mit der Vorderkante des Flachelements in Kontakt zu treten, um letzteres unter Bezugnahme auf die unbewegliche Schneidebrücke in einer gewünschten Position zu stoppen.

6. Verfahren gemäß Anspruch 5, **dadurch gekennzeichnet, dass**: ein Vorgang des Ritzens des Flachelements entlang zweier Seiten durchgeführt wird, die zueinander rechtwinklig sind, wobei das Flachelement stationär bleibt, d.h. ohne das Flachelement zwischen dem Abschluss des Ritzen der ersten Seite und dem Beginn des Ritzens der zweiten Seite einer Drehbewegung auszusetzen; und
die Anritzwerkzeuge (7, 8) während des Ritzens der zweiten Seite derart ausgerichtet sind, dass sie unter Bezugnahme auf ihre Ausrichtung während des Ritzens der ersten Seite eine Drehung um 90° um die Achse Z erfahren haben.

## Revendications

1. Machine pour effectuer des opérations de coupe sur des feuilles de verre multicouche qui comprennent une feuille de verre supérieure, une feuille de verre inférieure et un film intermédiaire de matière plastique synthétique, ladite machine comprenant :
- un établi fixe (1), définissant une surface de repos (2) qui doit recevoir la feuille (L) à usiner ;
- un pont de coupe fixe (6), sur lequel sont montés un outil de traçage supérieur (8) et un outil de traçage inférieur (7) placés respectivement au-dessus et en dessous de ladite surface de repos, qui sont mobiles le long du pont de coupe (6) dans une direction Y parallèle à la direction longitudinale du pont de coupe (6) afin d'exécuter des opérations de rayage sur les feuilles supérieure et inférieure d'une feuille de verre multicouche (L), ledit pont de coupe (6) étant pourvu d'un moyen pour activer le déplacement desdits outils de traçage (8, 7) dans la direction Y ;
- des moyens pour déplacer (21, 22, 23, 26) ladite feuille (L) sur l'établi fixe (1) dans une direction horizontale X orthogonale à la direction Y précitée ; et
- des moyens de commande électroniques (PC) pour commander ledit moyen d'activation du déplacement des outils de traçage (8, 7) dans la direction Y et desdits moyens de déplacement de la feuille dans la direction X,
où :
- l'outil de traçage supérieur (8) et l'outil de traçage inférieur (7) sont montés tous deux de sorte qu'ils puissent tourner autour d'un axe Z commun orthogonal à la direction X et à la direction Y, tout en étant déplacés le long de la direction Y ;
- les moyens de commande électroniques (PC) sont programmés pour commander pendant l'opération de rayage des feuilles supérieure et inférieure de la feuille de verre multicouche (L) un déplacement dans la direction X de la feuille (L) et un déplacement dans la direction Y des outils (8, 7), lesdits déplacements étant coordonnés l'un avec l'autre de manière à obtenir une rayure sur lesdites feuilles supérieure et inférieure selon une trajectoire prédéterminée quelconque (T) dans le plan de la feuille (L), avec des tronçons rectilignes et/ou incurvés, sans conférer une rotation à la feuille ;
- lesdits outils de traçage supérieur et inférieur (8, 7) étant des roues qui sont toujours orientées, pendant l'opération de rayage, selon la tangente à la trajectoire de traçage au point de la trajectoire auquel elles sont situées ; et
- lesdits moyens de déplacement de ladite feuille dans la direction horizontale X pendant l'opération de rayage comprennent un ou plusieurs élément(s) (22, 26) pour saisir la feuille, porté(s) par un pont (21, 23) mobile par rapport à l'établi fixe (1),
ladite machine étant **caractérisée en ce que** :
- lesdites roues constituant l'outil de traçage supérieur (8) et l'outil de traçage inférieur (7) sont portées chacune par un support respectif (20b, 19b) qui peut tourner librement autour dudit axe commun Z,
- chacune desdites roues constituant l'outil de traçage supérieur (8) et l'outil de traçage inférieur (7) peut tourner librement sur le support respectif (20b, 19b) autour d'un axe horizontal qui est défini à une distance (d) dudit axe commun Z,
de manière à assurer une orientation automatique des roues de traçage pendant l'opération de rayage dans la direction de la tangente locale à la trajectoire de traçage, et **en ce que**
- ledit pont mobile (21, 23) qui porte lesdits éléments de saisie (22, 26) est un pont à butée (23), qui est mobile en dessous de la surface de repos (2) et présente les éléments de saisie précités (22, 26) qui font saillie au-dessus de la surface de repos (2) à travers des fentes longitudinales (27) dans la surface de repos (2), en aval du pont de coupe fixe (6), et
- ledit pont à butée (23) est également pourvu d'une pluralité d'éléments d'arrêt (25) pour entrer en contact avec le bord avant de la feuille afin d'arrêter ce dernier dans une position souhaitée par rapport au pont de coupe fixe.

2. Machine selon la revendication 1, **caractérisée en ce que** lesdits éléments de saisie (22, 26) permettant de saisir la feuille (L) sont des pinces (26) conçues pour saisir un bord de la feuille (L).

3. Machine selon la revendication 1, **caractérisée en ce que** lesdits éléments de saisie (22, 26) permettant de saisir la feuille (L) sont des ventouses (22) conçues pour venir en prise avec la surface inférieure (13) de la feuille (L).

4. Machine selon la revendication 1, **caractérisée en ce que** lesdits moyens de commande électroniques sont programmés pour effectuer des rayures le long de lignes incurvées par l'intermédiaire desdits déplacements coordonnés de la feuille dans la direction X et des outils de traçage (7, 8) dans la direction Y, sans conférer une rotation à la feuille pendant de l'opération de rayage.

5. Procédé pour exécuter des opérations de rayage sur des feuilles de verre multicouche (L), qui comprennent une feuille de verre supérieure, une feuille de verre inférieure et un film intermédiaire en matière plastique synthétique, ledit procédé comprenant l'étape de à fournir :
- un établi fixe (1), définissant une surface de repos (2) qui doit recevoir la feuille (L) à usiner ; et
- un pont de coupe fixe (6), sur lequel sont montés un outil de traçage supérieur (8) et un outil de traçage inférieur (7) placés respectivement au-dessus et en dessous de ladite surface de repos, qui sont mobiles le long du pont de coupe (6) dans une direction Y parallèle à la direction longitudinale du pont de coupe (6), afin d'exécuter des opérations de rayage sur les feuilles supérieure et inférieure d'une feuille de verre multicouche (L), ledit pont de coupe (6) étant pourvu d'un moyen pour activer le déplacement desdits outils de traçage (8, 7) dans la direction Y,
où :
- l'outil supérieur (8) et l'outil inférieur (7) sont montés tous deux de sorte qu'ils puissent tourner autour d'un axe commun Z orthogonal à la direction X et à la direction Y tout en étant déplacés le long de la direction Y ;
- pendant l'opération de rayage des feuilles supérieure et inférieure de la feuille de verre multicouche (L), un déplacement de la feuille de verre (L) dans une direction horizontale X orthogonale à la direction précitée Y et un déplacement des outils (8, 7) dans la direction Y sont tous deux régis de manière à obtenir une rayure sur lesdites feuilles supérieure et inférieure selon une trajectoire prédéterminée quelconque (T) dans le plan de la feuille (L), avec des tronçons rectilignes et/ou incurvés, sans conférer une rotation à la feuille ;
- lesdits outils de traçage supérieur et inférieur (8, 7) sont des roues qui sont toujours orientées, pendant l'opération de rayage, selon la tangente à la trajectoire de traçage au point de la trajectoire auquel elles sont situées ; et
- ladite feuille est déplacée dans la direction horizontale X pendant l'opération de rayage au moyen d'un ou de plusieurs élément(s) (22, 26) permettant de saisir la feuille, portés par un pont (21, 23) mobile par rapport à l'établi (1)
ledit procédé étant **caractérisé en ce que** :
- lesdites roues constituant l'outil de traçage supérieur (8) et l'outil de traçage inférieur (7) sont portées chacune par un support respectif (20b, 19b) qui peut tourner librement autour dudit axe commun Z,
- chacune desdites roues constituant l'outil de traçage supérieur (8) et l'outil de traçage inférieur (7) peut tourner librement sur le support respectif (20b, 19b) autour d'un axe horizontal qui est défini à une distance (d) dudit axe commun Z,
de manière à assurer une orientation automatique des roues de traçage pendant l'opération de rayage dans la direction de la tangente locale à la trajectoire de traçage, et **en ce que**
- ledit pont mobile (21, 23) qui porte lesdits éléments de saisie (22, 26) est un pont à butée (23), qui est mobile en dessous de la surface de repos (2) et présente les éléments de saisie précités (22, 26) qui font saillie au-dessus de la surface de repos (2) à travers des fentes longitudinales (27) dans la surface de repos (2), en aval du pont de coupe fixe (6), et
- ledit pont à butée (23) est également pourvu d'une pluralité d'éléments d'arrêt (25) pour entrer en contact avec le bord avant de la feuille afin d'arrêter ce dernier dans une position souhaitée par rapport au pont de coupe fixe.

6. Procédé selon la revendication 5, **caractérisé en ce que** :
une opération de rayage de la feuille est exécutée le long de deux côtés mutuellement orthogonaux, en gardant la feuille immobile, c'est-à-dire, sans conférer une rotation à la feuille entre la fin d'un rayage du premier côté et le début d'un rayage du deuxième côté ; et
pendant le rayage du deuxième côté, lesdits outils de traçage (7, 8) ont une orientation tournée de 90° autour dudit axe Z par rapport à leur orientation pendant le rayage du premier côté.
